# EUROPÄISCHE PATENTSCHRIFT

(11) **EP 1 586 745 B1**
(45) Veröffentlichungstag und Bekanntmachung des Hinweises auf die Patenterteilung: **29.07.2015**
(21) Anmeldenummer: 04405224.9
(22) Anmeldetag: 13.04.2004
(51) Int. Cl.: F01D 25/24, F01D 21/04, F01D 9/02, F02C 6/12, F04D 27/02

(54) **Verdichtergehäuse**
Compressor casing
Carter de compresseur

(43) Veröffentlichungstag der Anmeldung: 19.10.2005
(73) Patentinhaber: ABB Turbo Systems AG, 5400 Baden (CH)
(72) Erfinder: Heinrich, Klaus, 5300 Turgi (CH); Behrendt, Detlef, 79790 Rheinheim (DE); Di-Pietro, Marco, 4665 Oftringen (CH); Camastral, Marc Andrea, 8442 Hettlingen (CH); Städeli, Markus, 8113 Boppelsen (CH)
(74) Vertreter: ABB Patent Attorneys

(56) Entgegenhaltungen:
- EP-A- 1 186 781
- WO-A-02/090722
- DE-A- 4 223 496
- US-A1- 2002 114 693

## Beschreibung

### Technisches Gebiet

Die Erfindung bezieht sich auf das Gebiet der Abgasturbolader.

Sie betrifft ein Anordnung zum Befestigen eines Lufteintrittsgehäuses an einem Verdichtergehäuse gemäss dem Patentanspruch 4, sowie ein Verdichtergehäuse eines Abgasturboladers gemäss dem Oberbegriff des Patentanspruchs 1.

### Stand der Technik

In Abgasturboladern werden Radialverdichter eingesetzt, die mit hoher Umfangsgeschwindigkeit rotieren. Im Bauteil ist dadurch eine hohe kinetische Energie gespeichert. Damit im Fall des Berstens des Verdichterrades weder Personen noch Sachwerte gefährdet werden, wird gefordert, dass keine Trümmer durch die das Rad umschliessenden Gehäuse nach aussen gelangen. Diese Aufgabe wird dadurch gelöst, dass das Verdichterrad von Gehäuseteilen umgeben wird, die in der Lage sind, die im Rad gespeicherte Energie aufzunehmen (Containment). Um die beim Energieabbau wirkenden Kräfte nicht auf ein unzulässiges Niveau ansteigen zu lassen, müssen sich Teile der Struktur elastisch und plastisch verformen können (Knautschzonen).

Der Abgasturbolader wird entweder direkt oder mittels einem speziellen Fuss auf der Motorkonsole befestigt. In den meisten Fällen ist die axiale Distanz zwischen Fuss und einem lufteinlassseitig am Verdichter befestigten Lufteintrittsgehäuse sehr gross. Das Lufteintrittsgehäuse kann als Filterschalldämpfer oder Luftsaugstutzen ausgeführt sein. Durch Motorvibrationen kann das Lufteintrittsgehäuse zu unzulässig grossen Schwingungen angeregt werden. Dies insbesondere dann, wenn die Eigenfrequenz des Lufteintrittsgehäuses nur unwesentlich über jener der Turboladerbefestigung liegt. In diesem Fall können beim Lufteintrittsgehäuse unzulässige Schwingungsüberhöhungen auftreten. Damit solche Schwingungsprobleme vermieden werden können, werden vom Turbolader hohe Eigenfrequenzen gefordert. Dies wiederum wird durch ein möglichst steifes Gehäuse erreicht.

Wie in EP 1 186 781 A1 beschrieben und dargestellt, wird typischerweise der dem Verdichter vorgeschaltete Filterschalldämpfer, bzw. falls dieser fehlt, ein entsprechender Luftsaugstutzen axial am Verdichtergehäuse angeflanscht. Die Flanschverbindung wird auf einem möglichst grossen Durchmesser ausgeführt. Die Befestigung des Lufteintrittsgehäuses auf grossem Durchmesser sichert eine steife Verbindung. Trotzdem bestimmt dieses Bauteil in vielen Fällen die Eigenfrequenz des gesamten Laders.

Die unterschiedlichen Designziele von Schwingungsreduktion und Containment haben gegensätzliche Anforderungen zur Folge: einerseits hohe Steifigkeit zur Erhöhung der Eigenfrequenzen, andererseits eine reduzierte Steifigkeit, damit sich Teile verformen können.

In WO 02/090722 ist ein Abgasturbolader mit einem Radialverdichter offenbart, bei welchem im Falle eines Verdichterradberstens ein axiales Wegschleudern von Gehäuseteilen oder am Verdichtergehäuse befestigten Bauteilen verhindert wird. Der Abgasturbolader weist hierfür eine Berstschutzvorrichtung mit einer einen Strömungskanal über den Laufschaufeln des Verdichterrades radial aussen begrenzenden Einsatzwand auf, die mit einer Sollbruchstelle versehen ist.

### Kurze Darstellung der Erfindung

Aufgabe der Erfindung ist es somit, eine Befestigung eines Lufteintrittsgehäuses an einem Verdichtergehäuse sowie eine entsprechende Struktur für das Verdichtergehäuse von Abgasturboladern zu schaffen, mit welcher sowohl hohe Eigenfrequenzen als auch ein verbessertes Containmentverhalten erreicht werden können.

Erfindungsgemäss wird diese Aufgabe mit einem Verdichtergehäuse mit den Merkmalen des Patentanspruchs 1, bzw. einer Anordnung mit den Merkmalen des Patentanspruchs 4 gelöst.

Das Lufteintrittsgehäuse und das Verdichtergehäuse weisen neben dem üblichen äusseren Flansch eine zweite Abstützung in Form eines Stützflansches auf, welcher auf einem kleineren Radius angeordnet ist als der Hauptflansch. Der Stützflansch weist einen Kraftschluss auf, der vorteilhafterweise durch eine axiale Verpressung von Lufteintrittsgehäuse und Verdichtergehäuse erreicht wird. Die doppelte Abstützung führt zur Anhebung der Eigenfrequenz des Lufteintrittsgehäuses. Erfindungsgemäss wird der Stützflansch des Verdichtergehäuses von dem Kontaktbereicht schräg nach aussen geführt und der den Stützflansch bildende Teil des Verdichtergehäuses auf möglichst grossem Radius am restlichen Verdichtergehäuse befestigt. Weitere innere Gehäuseteile verhindern nun, dass im Falle eines berstenden Verdichterrades eine direkte axiale Impulsübertragung von wegfliegenden Verdichterradteilen auf das Lufteintrittsgehäuse stattfindet. Die Gefahr, dass das Lufteintrittsgehäuse axial abgeschlagen werden könnte, wird dadurch reduziert. Der aussen liegende Teil des Verdichtergehäuses bildet zusammen mit der inneren Abstützung vom Lufteintrittsgehäuse den steifen Teil der Gehäuse, der zur Erreichung hoher Eigenfrequenzen benötigt wird.

Im Bereich zwischen dem Stützflansch und dem Verdichterrad wird durch diese Konstruktion Raum für die Anordnung von weniger steifen Gehäuseteile geschaffen, die zum Abbau der Energie wegfliegender Verdichterradteile benötigt werden.

Der schräg nach aussen führende Stützflansch kann als konische Wand, die zusätzlich axial verrippt sein kann gestaltet werden. Eine weitere vorteilhafte Ausgestaltung der inneren Abstützung wird erreicht, wenn der Stützflansch als eine Wand mit in Umfangsrichtung wechselnder radialer Neigung ausgebildet ist. Durch diese in Umfangsrichtung Zick-Zack geformte Gestaltung wird eine besonders steife Form erreicht.

Stützflansch und der äussere Flansch können mehrteilig ausgebildet oder in einem Teil gefertigt, beispielsweise gegossen, sein.

Weitere Vorteile ergeben sich aus den abhängigen Ansprüchen.

### Kurze Beschreibung der Zeichnungen

Im folgenden wird anhand der Figuren die erfindungsgemässe Befestigungsvorrichtung schematisch dargestellt und näher erläutert. In allen Figuren sind gleichwirkende Elemente mit gleichen Bezugszeichen versehen. Es zeigen:
- Fig. 1: ein Schnitt durch das Verdichtergehäuse eines Abgasturboladers, welche erfindungsgemäss mit einem Lufteintrittsgehäuse verbunden ist, und
- Fig. 2: eine Ansicht eines Teils des Verdichtergehäuses nach Fig. 1.

### Weg zur Ausführung der Erfindung

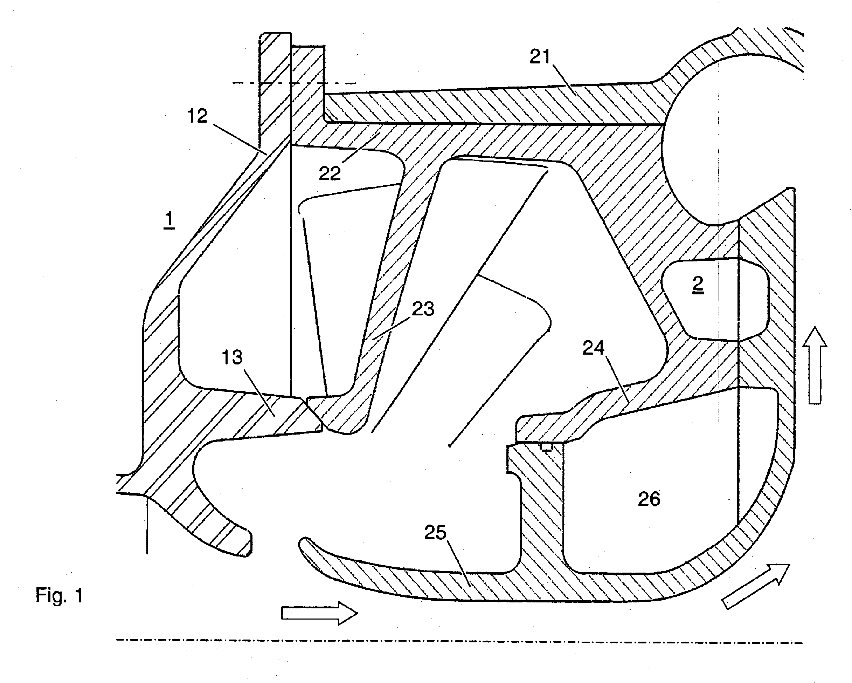

Fig. 1 zeigt einen Schnitt durch die Lufteintrittseite eines Abgasturboladers mit dem Verdichtergehäuse 2 und dem am Lufteintritt des Verdichters angeordneten Lufteintrittsgehäuse 1. Nicht dargestellt ist das um die mit der langen, strichpunktierten Linie angedeutete Achse drehbar gelagerte Verdichterrad sowie die gesamte Turbinenseite des Abgasturboladers. Die Strömungsrichtung des zu verdichtenden Mediums, typischerweise Luft, ist mit Pfeilen angedeutet.

Das Lufteintrittsgehäuse kann beispielsweise als Schalldämpfer oder Luftsaugstutzen ausgeführt sein.

Das Lufteintrittsgehäuse ist mittels mehrerer, entlang dem Umfang verteilten Schrauben oder anderer geeigneter Befestigungsmittel am Verdichtergehäuse befestigt. Die Schrauben fixieren das Lufteintrittsgehäuse sowohl in axialer als auch in radialer Richtung bezüglich dem äusseren Teil des Verdichtergehäuses. Die Schrauben sind in Fig. 1 lediglich mittels der kurzen strichpunktierten Linie angedeutet.

Zur Befestigung mittels der Schrauben weist das Lufteintrittsgehäuse im radial äusseren Bereich der dem Verdichtergehäuse zugewandten Gehäusewand einen Befestigungsflansch 12 auf. Das Verdichtergehäuse weist ebenfalls im radial äusseren Bereich einen entsprechenden äusseren Befestigungsflansch 22 auf. Der äussere Befestigungsflansch wird in der dargestellten Ausführungsform radial gegen aussen noch durch eine Gehäuseaussenwand 21 verstärkt. Wenn nicht aus Montagegründen die zweiteilige Ausfertigung notwendig ist, können Gehäuseaussenwand und Befestigungsflansch auch einteilig ausgebildet sein.

Im radial inneren Bereich der genannten Gehäusewand des Lufteintrittsgehäuses ist ein Stützflansch 13 angeordnet. Über diesen Stützflansch wird das Lufteintrittsgehäuse auf einem entsprechenden Stützflansch 23 am Verdichtergehäuse axial abgestützt.

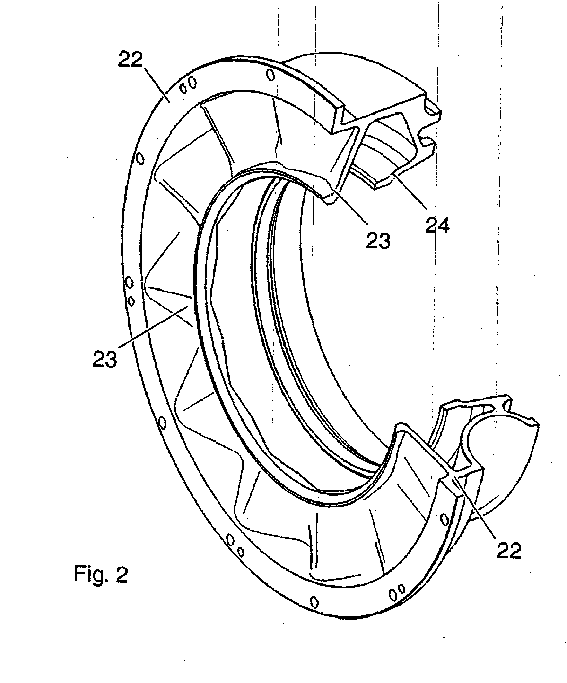

Erfindungsgemäss ist der Stützflansch 23 ausgehend von der Kontaktstelle zum Stützflansch 13 des Lufteintrittsgehäuses schräg nach aussen geführt und aussen am Gehäuse befestigt. Wie in Fig. 2 dargestellt, ist der Stützflansch 23 vorteilhafterweise zusammen mit den äusseren Wandteilen 22 in einem Stück gefertigt, beispielsweise gegossen.

Kern der Erfindung und entscheidend für das verbesserte Containmentverhalten ist der Abstand, welcher durch den schräg nach aussen geführten Stützflansch zwischen dem Stützflansch 23 und den inneren Wandteilen des Verdichtergehäuses entsteht. Dieser Abstand ermöglicht im Falle eines berstenden Verdichterrades die Verformung der inneren Wandteile, der Zwischenwand 24 und der Einsatzwand 25, und die Verschiebung in axialer Richtung, ohne dass die Verbindung zwischen Lufteintrittsgehäuse und Verdichtergehäuse beeinträchtigt wird. Durch die Verformung der Einsatzwand 25 im Bereich des Hohlraumes 26 und der Zwischenwand 24 sowie durch die Verschiebung wird der grösste Teil der kinetischen Energie des schnelllaufenden Verdichterrades abgebaut.

Die restliche Energie kann anschliessend von den festen, steifen Verbindungen zwischen Verdichtergehäuse und Lufteintrittsgehäuse an den inneren und äusseren Flanschen abgebaut werden. Die dann noch auf diese Verbindungen wirkenden Kräfte entsprechen nur noch einem Bruchteil der durch direkte axiale Impulsübertragung von wegfliegenden Verdichterradteilen erzeugten ursprünglichen Kraft.

Durch die funktionale Trennung der inneren und äusseren Verdichtergehäuseteile müssen keine Kompromisse bezüglich Verformbarkeit und Steifigkeit der einzelnen Teile eingegangen werden. Der Stützflansch 23 kann somit beliebig steif ausgebildet sein. Die konisch nach aussen geführte Wand des Stützflansches kann beispielsweise zusätzlich mit axial verlaufenden Rippen verstärkt sein. Alternativ zur glatt konisch verlaufenden Form kann die Wand auch eine in Umfangsrichtung wechselnde radiale Neigung aufweisen. In Fig. 1 ist diese wellenförmige Gestaltung durch die drei fein gezeichneten Rippen, welche von vorne gesehen abwechselnd nach links, rechts und wieder nach links ausschwenken, angedeutet, und auch Fig. 2 zeigt diese Ausführungsform des Stützflansches. Alle diese Massnahmen führen zu einer weiteren Versteifung des Stützflansches.

Vorteilhafterweise ist der Stützflansch 13 des Lufteintrittsgehäuses gegenüber dem Befestigungsflansch 12 axial vorgespannt. Beim Aufsetzen des Lufteintrittsgehäuses auf das Verdichtergehäuse in axialer Richtung kommt es zuerst im Bereich der Stützflansche 13 und 23 zu einem Kontakt zwischen Lufteintrittsgehäuse und Verdichtergehäuse. Im Kontaktbereich der Befestigungsflansche 12 und 22 besteht eine Lücke in axialer Richtung, welche erst durch das anschliessende Anziehen der Schrauben geschlossen wird. Durch das Schliessen der Lücke wird das Gehäuse des Lufteintrittsgehäuses zwischen Befestigungs- und Stützflansch geringfügig verzogen und dadurch das Lufteintrittsgehäuse mit der axialen Vorspannung beaufschlagt.

### Bezugszeichenliste

- 1: Lufteintrittsgehäuse
- 12: Befestigungsflansch
- 13: Stützflansch mit Auflagefläche
- 2: Verdichtergehäuse
- 21: Gehäuseaussenwand
- 22: Befestigungsflansch
- 23: Stützflansch mit Auflagefläche
- 24: Zwischenwand
- 25: Einsatzwand
- 26: Hohlraum, Knautschzone

## Patentansprüche

1. Verdichtergehäuse eines Abgasturboladers zur Aufnahme eines Verdichterrades, umfassend einen Strömungskanal, innere Gehäuseteile (24, 25) und äussere Gehäuseteile (21, 22), wobei die inneren Gehäuseteile den Strömungskanal umgeben und im Falle eines Berstens des Verdichterrades zur Aufnahme und zum zumindest teilweisen Abbauen der kinetischen Energie vorgesehen sind, und die äusseren Gehäuseteile radial ausserhalb der inneren Gehäuseteile angeordnet sind,
**dadurch gekennzeichnet, dass**
das Verdichtergehäuse zwei umlaufende Flansche (22, 23) zum Verbinden eines Lufteintrittsgehäuses (1) mit dem Verdichtergehäuse (2) aufweist, wobei die beiden Flansche radial auseinanderliegend angeordnet sind, und dass
der radial äussere Flansch (22) Bestandteil eines äusseres Gehäuseteils ist, und der radial innere Flansch (23) radial ausserhalb der inneren Gehäuseteile mit dem radial äusseren Flansch verbunden ist.

2. Verdichtergehäuse nach Anspruch 1, wobei der radial innere Flansch als von der Verbindungsstelle zum Lufteintrittsgehäuse radial nach aussen führende, konische Wand ausgebildet ist.

3. Verdichtergehäuse nach Anspruch 1, wobei der radial innere Flansch als von der Verbindungsstelle zum Lufteintrittsgehäuse radial nach aussen führende Wand mit in Umfangsrichtung wechselnder radialer Neigung ausgebildet ist.

4. Anordnung zum Befestigen eines Lufteintrittsgehäuses (1) an einem Verdichtergehäuse (2) eines Abgasturboladers, wobei die Anordnung das Lufteintrittsgehäuse und das Verdichtergehäuse umfasst, wobei
das Verdichtergehäuse nach einem der Ansprüche 1 bis 3 ausgebildet ist,
das Verdichtergehäuse das um eine Achse rotierbar angeordnete Verdichterrad umgibt und radial innenliegende innere Gehäuseteile (24, 25) sowie radial aussenliegende äussere Gehäuseteile (21, 22) umfasst,
die inneren Gehäuseteile (24, 25) im Falle eines Berstens des Verdichterrades zur Aufnahme und zum zumindest teilweisen Abbauen der kinetischen Energie vorgesehen sind,
das Lufteintrittsgehäuse in einem ersten Verbindungsbereich starr an den äusseren Gehäuseteilen (22) befestigt ist,
das Lufteintrittsgehäuse in einem zweiten Verbindungsbereich auf einem Stützflansch (23) des Verdichtergehäuses aufliegt, und
der Stützflansch (23) radial ausserhalb der inneren Gehäuseteile (24, 25) an den äusseren Gehäuseteilen (22) befestigt ist.

5. Anordnung nach Anspruch 4, wobei das Lufteintrittsgehäuse im ersten Verbindungsbereich einen Befestigungsflansch (12) aufweist, mit welchem das Lufteintrittsgehäuse am Verdichtergehäuse (22) befestigt ist, und dass das Lufteintrittsgehäuse im zweiten Verbindungsbereich einen Stützflansch (13) aufweist, mit welchem das Lufteintrittsgehäuse auf dem Verdichtergehäuse (2, 23) aufliegt, und dass im befestigten Zustand der Stützflansch des Lufteintrittsgehäuses gegenüber dem Befestigungsflansch mit einer axialen Vorspannung beaufschlagt ist.

6. Anordnung nach Anspruch 4 oder 5, wobei die inneren Gehäuseteile eine Einsatzwand (25) umfassen, die Einsatzwand den Strömungskanal für das zum Verdichten auf das Verdichterrad zu führende Medium begrenzt, und der Stützflansch des Verdichtergehäuses (23) radial ausserhalb der Einsatzwand (25) an den äusseren Gehäuseteilen (22) befestigt ist.

7. Anordnung nach Anspruch 6, wobei die inneren Gehäuseteile eine Einsatzwand (25) und mindestens eine Zwischenwand (24) umfassen, die Einsatzwand den Strömungskanal für das zum Verdichten auf das Verdichterrad zu führende Medium begrenzt und zwischen der Zwischenwand und der Einsatzwand mindestens ein Hohlraum (26) ausgebildet ist, und der Stützflansch des Verdichtergehäuses (23) radial ausserhalb der Zwischenwand (24) an den äusseren Gehäuseteilen (22) befestigt ist.

8. Anordnung nach einem der Ansprüche 4 bis 7, wobei der Stützflansch des Verdichtergehäuses als vom zweiten Verbindungsbereich radial nach aussen führende, konische Wand ausgebildet ist.

9. Anordnung nach einem der Ansprüche 4 bis 7, wobei der Stützflansch des Verdichtergehäuses als vom zweiten Verbindungsbereich radial nach aussen führende Wand mit in Umfangsrichtung wechselnder radialer Neigung ausgebildet ist.

## Claims

1. Compressor housing of an exhaust-gas turbocharger for accommodating a compressor wheel, comprising a flow passage, inner housing parts (24, 25) and outer housing parts (21, 22), wherein the inner housing parts surround the flow passage and, in the event of the compressor wheel bursting, are intended for absorbing and for at least partly dissipating the kinetic energy, and the outer housing parts are arranged radially outside the inner housing parts,
**characterized in that**
the compressor housing has two encircling flanges (22, 23) for connecting an air-inlet housing (1) to the compressor housing (2), wherein the two flanges are arranged at a radial distance apart, and **in that** the radially outer flange (22) is an integral part of an outer housing part, and the radially inner flange (23) is connected to the radially outer flange radially outside the inner housing parts.

2. Compressor housing according to Claim 1, wherein the radially inner flange is designed as a conical wall leading radially outward from the connecting point at the air-inlet housing.

3. Compressor housing according to Claim 1, wherein the radially inner flange is designed as a wall leading radially outward from the connecting point at the air-inlet housing and having radial inclination alternating in the circumferential direction.

4. Arrangement for fastening an air-inlet housing (1) on a compressor housing (2) of an exhaust-gas turbocharger, wherein the arrangement comprises the air-inlet housing and the compressor housing, wherein
the compressor housing is designed according to one of Claims 1 to 3,
the compressor housing surrounds the compressor wheel, rotatably arranged about an axis, and comprises inner housing parts (24, 25) lying radially on the inside and outer housing parts (21, 22) lying radially on the outside,
the inner housing parts (24, 25), in the event of the compressor wheel bursting, are intended for absorbing and for at least partly dissipating the kinetic energy,
the air-inlet housing is rigidly fastened to the outer housing parts (22) in a first connecting region,
the air-inlet housing rests on a supporting flange (23) of the compressor housing in a second connecting region, and
the supporting flange (23) is fastened to the outer housing parts (22) radially outside the inner housing parts (24, 25).

5. Arrangement according to Claim 4, wherein
the air-inlet housing, in the first connecting region, has a fastening flange (12), with which the air-inlet housing is fastened to the compressor housing (22), and the air-inlet housing, in the second connecting region, has a supporting flange (13), with which the air-inlet housing rests on the compressor housing (2, 23), and, in the fastened state, the supporting flange of the air-inlet housing is subjected to axial prestress relative to the fastening flange.

6. Arrangement according to Claim 4 or 5, wherein
the inner housing parts comprise an insert wall (25), the insert wall defines the flow passage for the medium to be directed to the compressor wheel for the compression, and
the supporting flange (23) of the compressor housing is fastened to the outer housing parts (22) radially outside the insert wall (25).

7. Arrangement according to Claim 6, wherein
the inner housing parts comprise an insert wall (25) and at least one intermediate wall (24), the insert wall defines the flow passage for the medium to be directed to the compressor wheel for the compression, and at least one cavity (26) is formed between the intermediate wall and the insert wall, and
the supporting flange (23) of the compressor housing is fastened to the outer housing parts (22) radially outside the intermediate wall (24).

8. Arrangement according to one of Claims 4 to 7, wherein the supporting flange of the compressor housing is designed as a conical wall leading radially outward from the second connecting region.

9. Arrangement according to one of Claims 4 to 7, wherein the supporting flange of the compressor housing is designed as a wall leading radially outward from the second connecting region and having radial inclination alternating in the circumferential direction.

## Revendications

1. Carter de compresseur d'une turbosoufflante à gaz d'échappement, destiné à recevoir une roue de compresseur, comprenant un canal d'écoulement, des parties de carter internes (24, 25) et des parties de carter externes (21, 22), les parties de carter internes entourant le canal d'écoulement et, dans le cas d'un éclatement de la roue de compresseur, étant prévues pour recevoir et au moins diminuer en partie l'énergie cinétique, et les parties de carter externes étant disposées radialement à l'extérieur des parties de carter internes,
**caractérisé en ce que**
le carter de compresseur présente deux brides périphériques (22, 23) destinées à raccorder un carter d'entrée d'air (1) au carter de compresseur (2), les deux brides étant disposées à distance radialement l'une de l'autre, et
la bride radialement externe (22) fait partie d'une partie de carter externe et la bride radialement interne (23) à l'extérieur des parties de carter internes est raccordée radialement à la bride radialement externe.

2. Carter de compresseur selon la revendication 1, dans lequel la bride radialement interne est réalisée sous forme de paroi conique s'étendant radialement vers l'extérieur depuis le point de raccordement au carter d'entrée d'air.

3. Carter de compresseur selon la revendication 1, dans lequel la bride radialement interne est réalisée sous forme de paroi s'étendant radialement vers l'extérieur depuis le point de raccordement au carter d'entrée d'air avec une inclinaison radiale alternant dans la direction périphérique.

4. Agencement pour la fixation d'un carter d'entrée d'air (1) à un carter de compresseur (2) d'une turbosoufflante à gaz d'échappement, l'agencement comprenant le carter d'entrée d'air et le carter de compresseur,
le carter de compresseur étant réalisé selon l'une quelconque des revendications 1 à 3,
le carter de compresseur entourant la roue de compresseur disposée de manière à pouvoir tourner autour d'un axe et comprenant des parties de carter internes (24, 25) situées radialement à l'intérieur ainsi que des parties de carter externes (21, 22) situées radialement à l'extérieur,
les parties de carter internes (24, 25), dans le cas d'un éclatement de la roue de compresseur, étant prévues pour recevoir et au moins diminuer en partie l'énergie cinétique,
le carter d'entrée d'air étant fixé rigidement aux parties de carter externes (22) dans une première région de raccordement,
le carter d'entrée d'air, dans une deuxième région de raccordement, reposant sur une bride de support (23) du carter de compresseur, et
la bride de support (23) étant fixée radialement aux parties de carter externes (22) à l'extérieur des parties de carter internes (24, 25).

5. Agencement selon la revendication 4, dans lequel le carter d'entrée d'air présente une bride de fixation (12) dans la première région de raccordement, avec laquelle le carter d'entrée d'air est fixé au carter de compresseur (2), et dans lequel le carter d'entrée d'air présente une bride de support (13) dans la deuxième région de raccordement, avec laquelle le carter d'entrée d'air repose sur le carter de compresseur (2, 23), et dans lequel dans l'état fixé, la bride de support du carter d'entrée d'air est sollicitée par rapport à la bride de fixation avec une précontrainte axiale.

6. Agencement selon la revendication 4 ou 5, dans lequel les parties de carter internes comprennent une paroi d'insertion (25), la paroi d'insertion limite le canal d'écoulement pour le fluide à conduire en vue de sa compression sur la roue de compresseur, et la bride de support du carter de compresseur (23) est fixée radialement à l'extérieur de la paroi d'insertion (25) au niveau des parties de carter externes (22).

7. Agencement selon la revendication 6, dans lequel les parties de carter internes comprennent une paroi d'insertion (25) et au moins une paroi intermédiaire (24), la paroi d'insertion limite le canal d'écoulement pour le fluide à conduire en vue de sa compression sur la roue de compresseur, et entre la paroi intermédiaire et la paroi d'insertion est réalisée au moins une cavité (26), et la bride de support du carter de compresseur (23) est fixée radialement à l'extérieur de la paroi intermédiaire (24) aux parties de carter externes (22).

8. Agencement selon l'une quelconque des revendications 4 à 7, dans lequel la bride de support du carter de compresseur est réalisée sous forme de paroi conique s'étendant radialement vers l'extérieur depuis la deuxième région de raccordement.

9. Agencement selon l'une quelconque des revendications 4 à 7, dans lequel la bride de support du carter de compresseur est réalisée sous forme de paroi s'étendant radialement vers l'extérieur depuis la deuxième région de raccordement avec une inclinaison radiale alternant dans la direction périphérique.
